(19) **Europäisches Patentamt**

**European Patent Office**

**Office européen des brevets**

(11) **EP 1 086 592 B1**

(12) **EUROPEAN PATENT SPECIFICATION**

(45) Date of publication and mention
of the grant of the patent:
**07.05.2003 Bulletin 2003/19**

(51) Int Cl.⁷: **H04N 7/36**, H04N 7/50

(86) International application number:
**PCT/IB99/01190**

(21) Application number: **99955581.6**

(22) Date of filing: **03.06.1999**

(87) International publication number:
**WO 99/065247 (16.12.1999 Gazette 1999/50)**

(54) **METHOD AND APPARATUS FOR BACKGROUND EXTRACTION FOR THE REDUCTION OF NUMBER OF CODED BLOCKS IN VIDEO CODING**

VERFAHREN UND VORRICHTUNG ZUR EXTRAKTION DES HINTERGRUNDS ZWECKS VERRINGERUNG DER ANZAHL CODIERTER BLÖCKE BEI DER VIDEOKODIERUNG

PROCEDE ET DISPOSITIF D'EXTRACTION D'ARRIERE-PLAN POUR DIMINUER LE NOMBRE DE BLOCS CODES EN CODAGE VIDEO

(84) Designated Contracting States:
**AT BE CH CY DE DK ES FI FR GB GR IE IT LI LU MC NL PT SE**

(30) Priority: **05.06.1998 US 90695**

(43) Date of publication of application:
**28.03.2001 Bulletin 2001/13**

(73) Proprietor: **Innomedia Pte Ltd.**
**Singapore 117684 (SG)**

(72) Inventors:
• **YU, Shaun**
**Republic of Singapore 650117 (SG)**
• **FUNG, Patrick**
**Republic of Singapore 180264 (SG)**

(74) Representative: **Harris, Ian Richard**
**D. Young & Co.,**
**21 New Fetter Lane**
**London EC4A 1DA (GB)**

(56) References cited:
**WO-A-88/09101**          **US-A- 4 796 087**
**US-A- 4 837 618**          **US-A- 5 737 537**

• **BONNEAU R: "USING THE CENTROID OPERATOR FOR FASTER MULTIRESOLUTION IMAGE COMPRESSION AND PATTERN RECOGNITION" PROCEEDINGS OF THE SPIE, vol. 2569, no. PART 02, 12 July 1995 (1995-07-12), pages 813-824, XP000672578**

**Description**

**FIELD OF THE INVENTION**

This application relates to a method and apparatus for improving the transmission of video information and, specifically, to a method and apparatus that identifies redundant information during video encoding.

**BACKGROUND OF THE INVENTION**

As a consequence of the limitations in transmission bandwidth, video signals have to undergo high-ratio compression before they can be transmitted in real-time. Extra compression is sometimes impossible without sacrificing the quality of the consequent pictures. Video data often has a fairly static background that is redundant in sequential frames. When video data is transmitted in real-time, it is desirable to identify this redundant data and to refrain from resending the redundant data If possible.

Many conventional video compression standards use the technique of motion estimation in conjunction with DCT (Discrete Cosign Transfer). The DCT is a special case of a discrete Fourier transform in which the sine components of the coefficients have been eliminated, leaving a single number. DCT itself does not result in a reduction, since the transform yields as many coefficients as samples, but it converts the input video into a form where redundancy can be easily detected and removed. Because DCT is computation intensive, it is desirable to avoid transforming data if possible.

US patent US-A-4,837,618 describes a system of coding moving images that produces a predictive error signal by predictive coding based on inter-frame correlation and quantising of the predictive error signal for each block of a picture frame. The system includes a block coding/non-coding decision unit for calculating a first evaluation value of the predictive error signal for each block of the picture frame. This unit decides that block non-coding is applicable when the first evaluation value is less than a first threshold value and that block coding is applicable when the first evaluation value is greater than the first threshold value. The predictive error signal is not transmitted when the result of the decision is for block non-coding and the predictive error signal is quantised and transmitted when the result of the decision is for block coding.

European patent application EP-A-0,439,334 describes a motion analysis system in which a colour marker is attached to an object to be analysed. A TV camera is arranged to pick up the colour marker and to output a colour image. A colour extraction unit is operable to extract a particular colour from the colour image produced by the TV camera. An area calculation unit calculates the area of the particular colour extracted by the colour extraction unit. A centre of gravity calculation is connected to the area calculation unit for calculating the position of the centre of gravity of the particular colour based on the area calculated by the area calculation unit.

**SUMMARY OF THE INVENTION**

An aspect of the invention provides a method of processing video data, comprising the steps of: determining a difference between an intensity of pixels of a current block of the current frame and corresponding pixels of a best-matched block in a previous frame to yield a difference array; applying a center of gravity calculation in the difference array to detect any shift of center of gravity between the current block and the best-matched block; and determining the current block to be non-static and encoding the current block when the shift in the center of gravity exceeds a predetermined threshold for the shift of gravity.

Another aspect of the invention provides an apparatus for processing video data, comprising: means for determining a difference between an intensity of pixels of a current block of the current frame and corresponding pixels of a best-matched block in a previous frame to yield a difference array; means for applying a center of gravity calculation to the difference array to determine any shift of center of gravity between the current block and the best-matched block; and means for determining the current block to be non-static and encoding the current block when the shift in the center of gravity exceeds a predetermined threshold for the shift of gravity.

A further aspect of the invention comprises a computer program product comprising a computer usable medium having computer readable code embodied therein for implementing the aforementioned method.

A preferred embodiment of the present invention provides a method and apparatus that distinguishes the static component of a frame from its dynamic component and provides a computationally efficient method for background extraction. If a block in a current frame is determined to correspond to a static component, it is not encoded or sent. A preferred embodiment of the present invention works on the block level and has two basic parts. First, the difference in pixel intensities between each block in the current frame and its best-matched corresponding block in a previous frame are determined. These differences are ther processed further to reduce the effects of noise in subsequent calculations before they are passed to the second part.

The second part applies a concept called herein "center of gravity" to determine a degree of similarity between two blocks in the respective current and previous frames. The term "center of gravity" is used because of the concept's similarity to the concept of center of gravity in the mechanical sciences. The center of gravity is determined for a chosen block (in the current frame) and compared with its best match (in the previous frame). A large discrepancy in the two figures indicates dis-similarity and a small discrepancy Indicates similarity. To simplify computations, in the described embodiment, the center of gravity operation is carried out on a difference array instead of the current and previous blocks from which it is derived.

A fuller understanding of the invention will become apparent and appreciated by referring to the following description and claims taken in conjunction with the accompanying drawings.

## BRIEF DESCRIPTION OF THE DRAWINGS

The accompanying drawings, which are incorporated in and constitute a part of this specification, illustrate several embodiments of the invention and, together with the description, serve to explain the principles of the invention.

Fig. 1 is a block diagram of a computer system in accordance with a preferred embodiment of the present invention.

Fig. 2 is a flow chart of steps performed by a transmitter in the embodiment of Fig. 1.

Fig. 3 is a diagram of data structures used in the flow chart of Fig. 2.

Fig. 4 contains pseudocode showing details of a preprocessing method of Fig. 2.

Fig. 5 shows two reference points, ref1 and ref2, in a current block of a current frame.

## DETAILED DESCRIPTION OF A PREFERRED EMBODIMENT

The following paragraphs describe a preferred embodiment of the present invention. Where convenient, the same reference numbers will be used to the same or like parts.

I General Description

In conventional video-conferencing applications, a significant portion of the frames contain background images that are essentially static and that carry no fresh information in their corresponding bit streams. If these blocks can be identified from their complementary moving parts, redundant information in the temporal domain can be separated and zero-coded to save bandwidth for the coding of information crucial to the perceptual coherence of the image sequences. In addition to the reduction in the amount of coded data, the heavily computational DCT (Discrete Cosine Transform) and IDCT (Inverse Discrete Cosine Transform) operations can be bypassed, since the results are all zeros

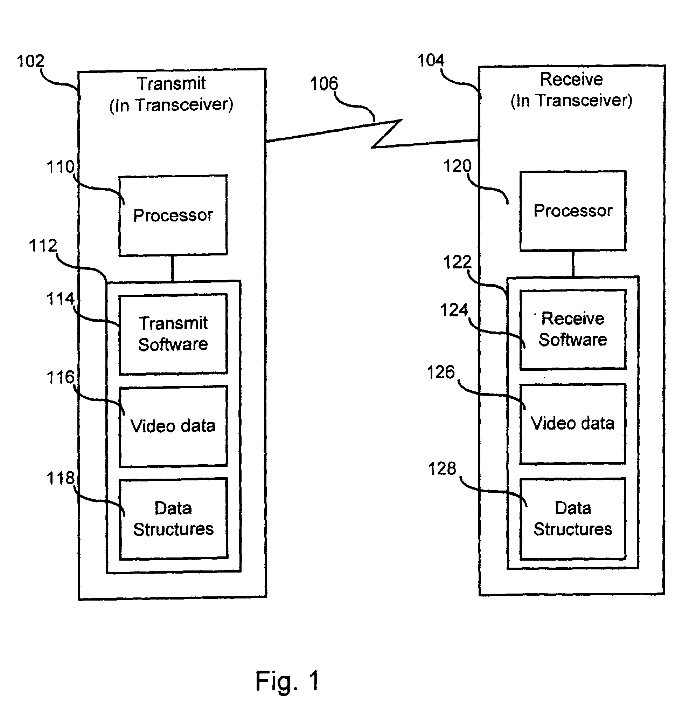

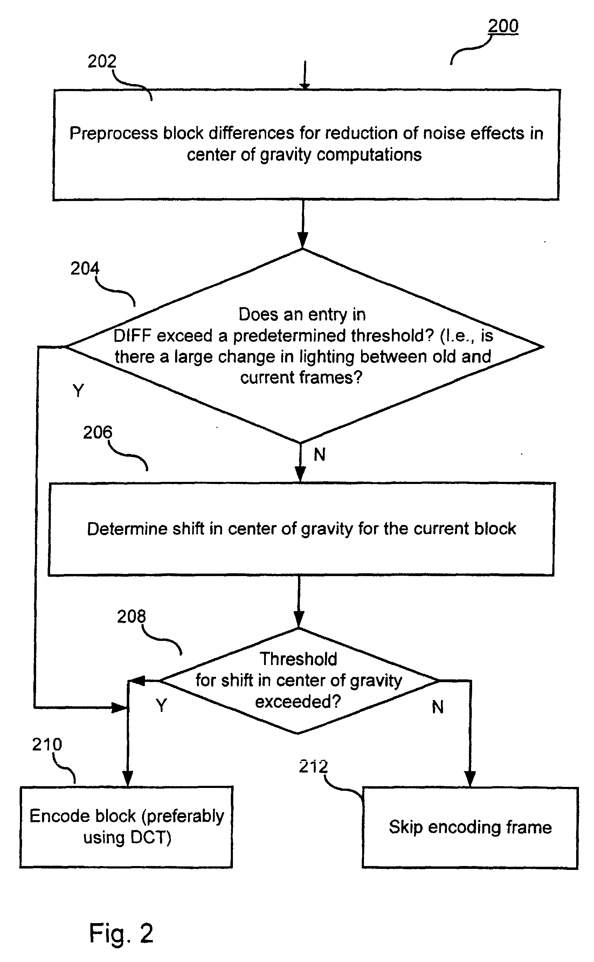

Fig. 1 is a block diagram of a video transmission system 100 in accordance with a first preferred embodiment of the present invention. Fig. 1 includes a transmitter 102 (which can be part of a first transceiver) sending video data over connection 106 to a receiver 104 (which can be part of a second transceiver). In the described embodiment, transmitter 102 and receiver 104 each include a processor 110, 120 and a memory 112, 122. Memory 112, 122 stores program instructions performing the steps of Figs. 2-4 and also including appropriate data structures, video data, and reference data as described below. Connection 106 can be any appropriate type of connection, such as a LAN, WAN, a hardware channel, the internet, a carrier wave, etc.

It should be understood that the system of Fig. 1 is shown for purposes of example only. A person of ordinary skill in the art will understand that system 100 may also contain additional information, such as input/output lines; input devices, such as a keyboard, a mouse, and a voice input device; and display devices, such as a display terminal. Transmitter 102 and receiver 104 can be (or can be part of) general purpose computers, special purpose computers, or specialized hardware containing a processor and memory. Other embodiments of the invention may also be implemented in hardware, such as programmable logic devices, or in analog circuitry. One or more of system 100 may also include an input device, such as a floppy disk drive, CD ROM reader, or DVD reader, that reads computer instructions stored on a computer readable medium, such as a floppy disk, a CD ROM, or a DVD drive. System 100 also may include application programs, operating systems, data, etc., which are not shown in the figure for the sake of clarity.

In the following discussion, it will be understood that the steps of methods and flow charts discussed preferably are performed by processor 110 (or a similar processor) executing instructions stored in memory 112 (or other appropriate memory). It will also be understood that the invention is not limited to any particular implementation or programming technique and that the invention may be implemented using any appropriate techniques for implementing the functionality described herein. The invention is not limited to any particular programming language or operating system.

In alternative embodiments, hard-wired circuitry may be used in place of or in combination with software instructions to implement the invention. Thus, the invention is not limited to any specific combination of hardware circuitry and software.

The term "computer-usable medium" as used herein refers to any medium that participates in providing instructions to a processor for execution. Such a medium may take many forms, including but not limited to, non-volatile media, volatile media, and transmission media. Non-volatile media includes, for example, optical or magnetic disks, such as a storage device. Volatile media includes dynamic memory. Transmission media include coaxial cables, copper wire and fiber optics, including the wires that comprise a bus within a computer. Transmission media can also take the form of acoustic or light waves, such as those generated during radio-wave and infra-red data communications.

Common forms of computer-usable media include, for example a floppy disk, a flexible disk, a hard disk, magnetic tape, or any other magnetic medium, a CD-ROM, any other optical medium, punchcards, papertapes, any other physical medium with patterns of holes, a RAM, a PROM, an EPROM, a FLASH-EPROM, any other memory chip or cartridge, a carrier wave as described hereafter, or any other medium from which a computer can read.

II. Specifics of A Preferred Embodiment

Fig. 2 is a flow chart of steps performed by a transmitter in the embodiment of Fig. 1. The method is formed of two parts: a preprocessing part, which includes step 202 and a center of gravity part, which includes steps 204-212.

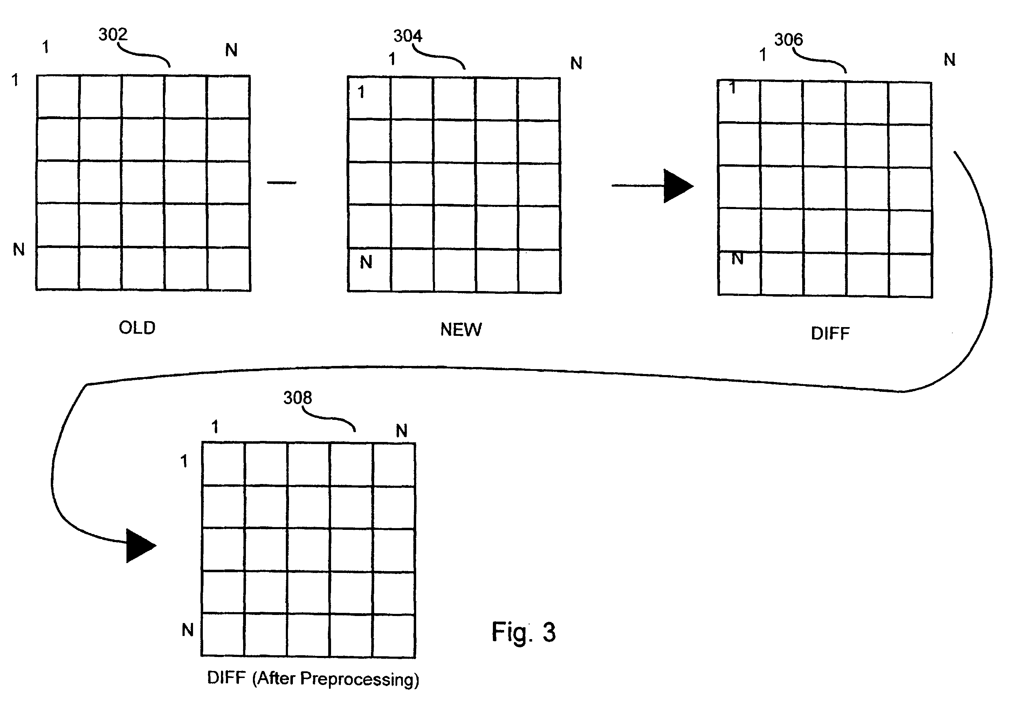

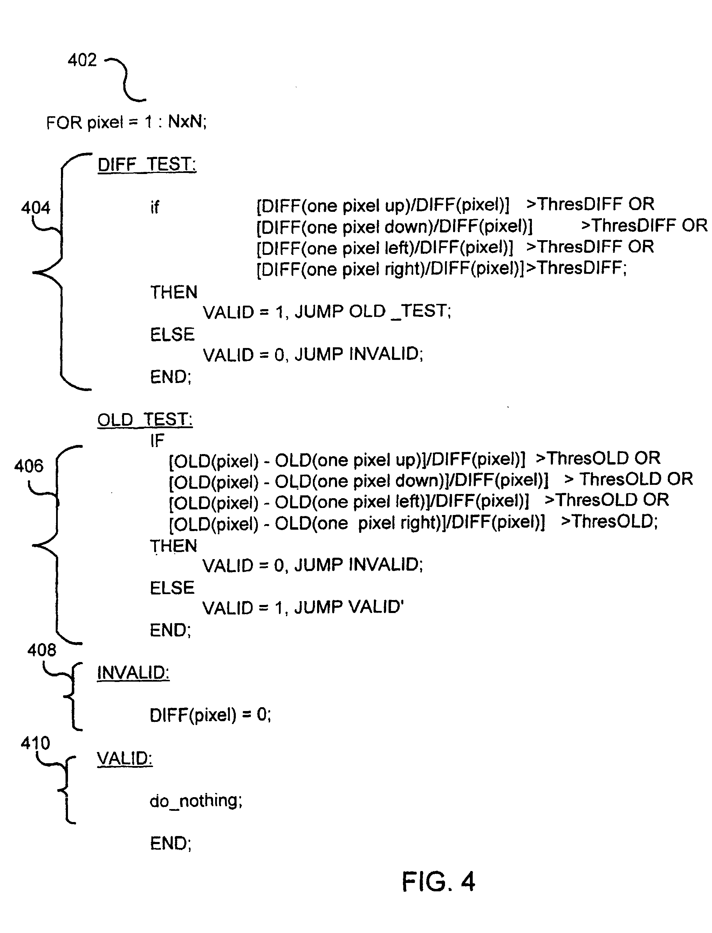

The preprocessing step 202 involves determination of a difference array by determining the difference in intensity between respective pixels in the previous and current blocks. In the described embodiment, DIFF and the video data being processed are stored in memory 112. Fig. 3 shows the determination of difference array DIFF 306 by subtracting a current block NEW 304 of a current frame from a best-matched block OLD 302 of a previous frame. DIFF is further processed as shown in Fig. 4 to yield a preprocessed difference array DIFF 308.

Difference array DIFF 306, 308 contains a total of NxN pixels, and each pixel has an effect, with strength dependent on both the magnitude and position of the pixel, on the center of gravity of the whole array population. The influence, however, of any pixel on the center of gravity can be frozen by removing its value from the difference array DIFF. Scanning for pixels whose value must be removed from DIFF is the purpose of the preprocessing step.

In this regard, two types of pixels are undesirable and their effects must be removed. The first type is pixels with outstanding values among their surrounding neighborhood due to the contributions of noise. The second type of pixels involves those originated from highly intensity varying patterns (e.g., checker-board patterns of shirts). Because such patterns have sharp variations in pixel intensity in the near locality, they can easily generate high-valued pixels in the difference array and result in a wrong conclusion of a substantial change in the center of gravity of the associated blocks even though the patterns shift by only a small margin.

The following variables used in Fig. 4:

N: Length of blocks,
NEW: Block in current frame being coded,
OLD: Best-matched block for NEW in the previous frame,
DIFF: the difference array (NEW - OLD),
VALID: Label for pixels in DIFF to be retained,
INVALID: Label for pixels in DIFF to be destroyed,
DIFF_TEST: Test for isolating pixels in DIFF with outstanding values from their immediate neighborhood, and
OLD_TEST: Test for isolating pixels in DIFF that originate from patterns in OLD with highly varying intensities.

Fig. 4 shows details of the preprocessing part. As shown by loop 402, the steps of Fig. 4 are performed for each of NxN pixels in the current block. In a DIFF_TEST step 404, the difference in pixel intensities between a current pixel in the current block and a corresponding pixel in the block's best-match correspondence in the previous frame are determined. DIFF_TEST 404 compares, to the current pixel in the difference array DIFF, pixels in DIFF that are one up, one down, one left and one right from the current pixel in DIFF. If the ratio between any of the neighboring pixels in DIFF and the current pixel in DIFF is larger than a predetermined threshold ThresDIFF, then control passes to OLD_TEST 406. In the described embodiment, ThresDIFF is 0.9, although other values can also be used. Otherwise (if all ratios are less than or equal to ThresDIFF) control passes to INVALID 408 and the current pixel in the difference array DIFF 308 is set to zero.

OLD_TEST 406, compares difference values for pixels in the OLD array that are one up, one down, one left and one right from a current pixel in OLD to the current pixel in DIFF. If the ratio between a difference value for any one of the neighboring pixels in OLD and the current pixel in DIFF is greater than a predetermined threshold ThresOLD, control passes to INVALID and the current pixel in the difference array DIFF 308 is set to zero. In the described embodiment, ThresOLD is 1, although other values can also be used. Otherwise control passes to VALID 408 and the value of the current pixel in DIFF 308 remains unchanged.

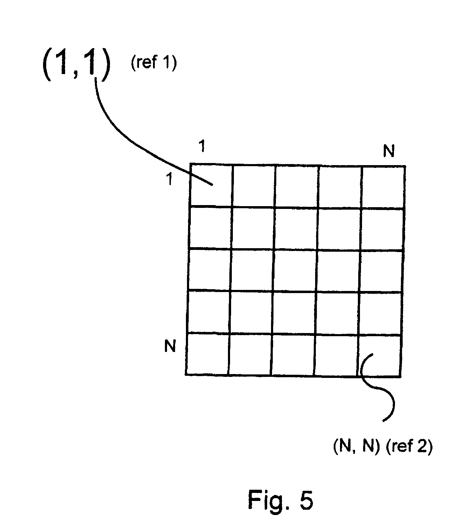

The second part of the method in accordance with the present invention applies the "center of gravity" concept. The core of the background extraction method lies in the interpretation of the difference in center of gravity as a measure of the degree of similarity in the content of the blocks involved. For the center of gravity of an object to be meaningful, it has to be calculated with respect to a certain point of reference that functions as the origin of the coordinate system being used. This reference point can be chosen to be any one of the NxN points contained in a block. Taking the point (1,1) as a reference (as shown in Fig. 5), the center of gravity of NEW and OLD can be written from definitions as:

$$X_{NEW} = \Sigma_{(all\ rows)}\ \Sigma_{(all\ cols)}\ [NEW(row, col) \bullet col] / \Sigma_{(all\ rows)}\ \Sigma_{(all\ cols)}\ NEW(row, col),$$

$$Y_{NEW} = \Sigma_{(all\ rows)}\ \Sigma_{(all\ cols)}\ [NEW(row, col) \bullet row] / \Sigma_{(all\ rows)}\ \Sigma_{(all\ cols)}\ NEW(row, col),$$

$$and$$

$$X_{OLD} = \Sigma_{(all\ rows)}\ \Sigma_{(all\ cols)}\ [OLD(row, col) \bullet col] / \Sigma_{(all\ rows)}\ \Sigma_{(all\ cols)}\ OLD(row, col),$$

$$YOLD = \Sigma_{(all\ rows)}\ \Sigma_{(all\ cols)}\ [OLD(row, col) \bullet row] / \Sigma_{(all\ rows)}\ \Sigma_{(all\ cols)}\ OLD(row, col). \qquad (1)$$

where the "•" operator is the multiplication operator.

The direct employment of the above formula in the described method may be problematic for certain types of data because the same image of a different scale plus an appropriate shifting can give the same center of gravity value despite their difference in appearance to the human eye. To avoid this, $X_{OLD}$ and $Y_{OLD}$ can be redefined as:

$$X_{OLD} = \Sigma_{(all\ rows)}\ \Sigma_{(all\ cols)}\ [OLD(row, col) \bullet col] / \Sigma_{(all\ rows)}\ \Sigma_{(all\ cols)}\ NEW(row, col),$$

$$Y_{OLD} = \Sigma_{(all\ rows)}\ \Sigma_{(all\ cols)}\ [OLD(row, col) \bullet row] / \Sigma_{(all\ rows)}\ \Sigma_{(all\ cols)}\ NEW(row, col). \qquad (2)$$

The modifications in equation (2) will not affect blocks that are truly similar. Because the method is only interested in the change in the center of gravity in the two blocks NEW and OLD, we obtain:

$$\Delta X_{ref1} = X_{NEW} - X_{OLD}$$

$$= \Sigma_{(all\ rows)}\ \Sigma_{(all\ cols)}\ [DIFF(row, col) \bullet col] / \Sigma_{(all\ rows)}\ \Sigma_{(all\ cols)}\ NEW(row, col),$$

$$\Delta Y_{ref1} = Y_{NEW} - Y_{OLD}$$

$$= \Sigma_{(all\ rows)}\ \Sigma_{(all\ cols)}\ [DIFF(row, col) \bullet row] / \Sigma_{(all\ rows)}\ \Sigma_{(all\ cols)}\ NEW(row, col).$$

Contrary to what is expected based on knowledge in the theory of center of gravity the center of gravity of OLD varies with the reference point location after the replacement of equation (1) by equation (2) is made. Taking (N, N) as another point of reference (denoted by ref2 below) the following equations can be obtained.

$$\Delta X_{ref2} = \Sigma_{(all\ rows)}\ \Sigma_{(all\ cols)}\ [DIFF(row, col) \bullet (N+1-col)] / \Sigma_{(all\ rows)}\ \Sigma_{(all\ cols)}\ NEW(row, col)$$

$$= k\text{-}\Delta X_{ref1,}$$

$$\Delta Y_{ref2} = \Sigma_{(all\ rows)}\ \Sigma_{(all\ cols)}\ [DIFF(row, col) \bullet (N+1-row)] / \Sigma_{(all\ rows)}\ \Sigma_{(all\ cols)}\ NEW(row, col)$$

$$= k\text{-}\Delta Y_{ref2}$$

where

$$k = (N+1) \bullet [1 - \Sigma_{(all\ rows)}\ \Sigma_{(all\ cols)}\ OLD(row, col) / \Sigma_{(all\ rows)}\ \Sigma_{(all\ cols)}\ NEW(row, col)].$$

Therefore, $(\Delta X_{ref1}, \Delta Y_{ref1})$ and $(\Delta X_{ref2}, \Delta Y_{ref2})$ measure the shift in center of gravity in the x and y directions with reference to the points (1,1) and (N,N) respectively. The described embodiment checks for the condition that at least one of the above figures has an absolute value exceeding a certain threshold. If the condition is satisfied, it implies that there are observable differences between the blocks, and hence the NEW block must be coded and sent by the transmitter. Conversely, if the condition fails to hold, the two blocks are reasonably similar and, thus, both the DCT calculation and the coding procedure can be skipped for NEW.

There are occasions when NEW and OLD carry the same image with the same center of gravity but, owing to a change in lighting, they are seen to be different. Because the center of gravity test introduced above is not able to identify these situations, an extra rule is introduced to serve the purpose. If any entry in DIFF exceeds a specified threshold, then the NEW block has to be coded, regardless of the change in center of gravity.

The second part of the method is shown in steps 204-212 of Fig. 2. Step 204 determines whether an entry in DIFF 308 exceeds a predetermined large difference threshold. In a preferred embodiment, this predetermined large difference threshold is 70, although other values can be used. If an entry in DIFF exceed the predetermined large difference threshold, control passes to step 210 and the block is encoded.

Step 206 determines a shift in the center of gravity between the current block and the previous block for the reference points ref1 and ref2. In a preferred embodiment, this determination is made as follows:

$$\Delta X_{ref1} = X_{NEW} - X_{OLD}$$

$$= \Sigma_{(all\ rows)}\ \Sigma_{(all\ cols)}\ [DIFF(row, col) \bullet col]/\ \Sigma_{(all\ rows)}\ \Sigma_{(all\ cols)}\ NEW(row, col);$$

$$\Delta Y_{ref1} = Y_{NEW} - Y_{OLD}$$

$$= \Sigma_{(all\ rows)}\ \Sigma_{(all\ cols)}\ [DIFF(row, col) \bullet row]/\ \Sigma_{(all\ rows)}\ \Sigma_{(all\ cols)}\ NEW(row, col);$$

$$k = (N+1) \bullet [1-\Sigma_{(all\ rows)}\ \Sigma_{(all\ cols)}\ OLD(row, col)\ /\Sigma_{(all\ rows)}\ \Sigma_{(all\ cols)}\ NEW(row,col)];$$

$$\Delta X_{ref2} = k-\Delta X_{ref1}$$

$$= \Sigma_{(all\ rows)}\ \Sigma_{(all\ cols)}\ [DIFF(row, col) \bullet (N+1-col)]/\ \Sigma_{(all\ rows)}\ \Sigma_{(all\ cols)}\ NEW(row, col);$$

$$\Delta Y_{ref2} = k-\Delta Y_{ref2}$$

$$= \Sigma_{(all\ rows)}\ \Sigma_{(all\ cols)}\ [DIFF(row, col) \bullet (N+1-row)]/\ \Sigma_{(all\ rows)}\ \Sigma_{(all\ cols)}\ NEW(row, col).$$

In step 208, if the shift in the center of gravity for any one of $(\Delta X_{ref1}, \Delta Y_{ref1}, \Delta X_{ref2},$ or $\Delta Y_{ref2})$ is greater than a predetermined threshold, then control passes to step 210 and the block is encoded. Otherwise, the block is skipped and is not encoded. In a preferred embodiment, the threshold for the shift in the center of gravity is 0.1, although other values can be used.

In summary, the present invention provides a method and apparatus that isolates the stationary portions of video images from their moving components. This method and apparatus can produce a considerable increase in frame rate for, for example, video conferencing applications.

While the invention has been described in conjunction with a specific embodiment, it is evident that many alternatives, modifications and variations will be apparent to those skilled in the art in light of the foregoing description.

**Claims**

**1.** A method of processing video data, comprising the steps of:

determining a difference between an intensity of pixels of a current block (304) of the current frame and corresponding pixels of a best-matched block (302) in a previous frame to yield a difference array (306);
applying a center of gravity calculation (206) in the difference array to detect any shift of center of gravity between the current block and the best-matched block; and

determining the current block to be non-static and encoding the current block when the shift in the center of gravity exceeds a predetermined threshold for the shift of gravity (208, 210).

2. The method of claim 1, further comprising the step of:

preprocessing (202) the difference array to reduce the effects of noise prior to the step of determining the shift in the center of gravity.

3. The method of claim 2, wherein the preprocessing step includes the steps of:

zeroing values from the difference array corresponding to pixels with outstanding values among their neighbor pixels.

4. The method of claim 3, wherein the preprocessing step includes the step of:

comparing, to a current pixel in the difference array, pixels in the difference array that are one up, one down, one left and one right from the current pixel in the difference array.

5. The method of claim 3, wherein the preprocessing step includes the step of:

comparing, to a current pixel in the difference array, difference values for pixels in the previous block that are one up, one down, one left and one right from a current pixel in the previous block.

6. The method of claim 2, wherein the preprocessing step includes the steps of:

zeroing values from the difference array corresponding to pixels corresponding to high intensity varying patterns.

7. The method of claim 1, further comprising the step of:

determining whether the intensity of an entry in the difference array exceeds a predetermined large difference threshold value.

8. The method of claim 1, further comprising the step of:

determining whether the change in lighting for the current block exceeds a predetermined large difference threshold.

9. The method of claim 1, further comprising the step of:

transmitting the encoded block.

10. The method of claim 1, further comprising the step of:

refraining (212) from encoding the current block when the shift in the center of gravity falls below a predetermined threshold for the shift of gravity.

11. An apparatus for processing video data, comprising:

means for determining a difference between an intensity of pixels of a current block (304) of the current frame and corresponding pixels of a best-matched block (302) in a previous frame to yield a difference array (306); means (206) for applying a center of gravity calculation to the difference array to determine any shift of center of gravity between the current block and the best-matched block; and means (208, 210) for determining the current block to be non-static and encoding the current block when the shift in the center of gravity exceeds a predetermined threshold for the shift of gravity.

12. The apparatus of claim 11, further comprising:

means for preprocessing the difference array to reduce the effects of noise prior to the step of determining the shift in the centre of gravity.

**13.** The apparatus of claim 12, wherein the preprocessing portion includes:

a means for zeroing values from the difference array corresponding to pixels with outstanding values among their neighbor pixels.

**14.** The apparatus of claim 13, wherein the preprocessing means includes:

means for comparing, to a current pixel in the difference array, pixels in the difference array that are one up, one down, one left and one right from the current pixel in the difference array.

**15.** The apparatus of claim 13, wherein the preprocessing means includes:

means for comparing, to a current pixel in the difference array, difference values for pixels in the previous block that are one up, one down, one left and one right from a current pixel in the previous block.

**16.** The apparatus of claim 12, wherein the preprocessing means includes:

means for zeroing values from the difference array corresponding to pixels corresponding to high intensity varying patterns.

**17.** The apparatus of claim 11, further comprising:

means for determining whether the intensity of an entry in the difference array exceeds a predetermined large difference threshold value.

**18.** The apparatus of claim 11, further comprising:

means for determining whether the change in lighting for the current block exceeds a predetermined large difference threshold.

**19.** The apparatus of claim 11, further comprising:

means (114) for transmitting the encoded block.

**20.** The apparatus of claim 11, further comprising:

means (212) for refraining from encoding the current block when the shift in the center of gravity falls below a predetermined threshold for the shift of gravity.

**21.** A computer program product comprising:

a computer usable medium having computer readable code embodied therein for implementing the method of any of claims 1 to 10.


**Patentansprüche**

**1.** Verfahren zur Verarbeitung von Videodaten, das die Schritte aufweist:

Bestimmen einer Differenz zwischen einer Intensität von Pixeln eines gegenwärtigen Blocks (304) des gegenwärtigen Einzelbildes und entsprechenden Pixeln eines am besten passenden Blockes (302) in einem vorherigen Einzelbild, um eine Differenzanordnung (306) zu erzielen,
Anwenden einer Schwerpunktsberechnung (206) in der Differenzanordnung bzw. in dem Differenzarray, um eine Verschiebung des Schwerpunktes zwischen dem gegenwärtigen Block und dem bestangepaßten Block zu erfassen, und

Feststellen, daß der gegenwärtige Block nicht statisch ist, und Codieren des gegenwärtigen Blockes, wenn die Verschiebung des Schwerpunkts einen vorbestimmten Schwellwert für die Verschiebung des Schwerpunkts (208, 210) überschreitet.

2. Verfahren nach Anspruch 1, das weiterhin den Schritt aufweist:

Vorverarbeitung (202) der Differenzanordnung, um die Effekte des Rauschens zu reduzieren vor dem Schritt des Bestimmens der Verschiebung des Schwerpunkts.

3. Verfahren nach Anspruch 1, wobei der Vorverarbeitungsschritt die Schritte aufweist:

auf Null stellen derjenigen Werte von der Differenzanordnung, die Pixeln mit gegenüber den benachbarten Pixeln hervorstechenden Werten entsprechen.

4. Verfahren nach Anspruch 3, wobei der Vorverarbeitungsschritt den Schritt aufweist:

Vergleichen eines gegenwärtigen Pixels in der Differenzanordnung mit Pixeln in der Differenzanordnung, die eins über, eins unter, eins links und eins rechts von dem gegenwärtigen Pixel in der Differenzanordnung sind.

5. Verfahren nach Anspruch 3, wobei der Vorverarbeitungsschritt den Schritt aufweist:

Vergleichen eines gegenwärtigen Pixels in der Differenzanordnung mit Differenzwerten für Pixel in dem vorherigen Block, die eins oberhalb, eins unterhalb, eins links und eins rechts von einem gegenwärtigen Pixel in dem vorherigen Block sind.

6. Verfahren nach Anspruch 2, wobei der Vorverarbeitungsschritt die Schritte aufweist:

auf Null stellen der Werte von der Differenzanordnung, die Pixeln entsprechen, die variierenden Mustem hoher Intensität entsprechen.

7. Verfahren nach Anspruch 1, das weiterhin den Schritt aufweist:

Bestimmen, ob die Intensität eines Eintrages in der Differenzanordnung einen vorbestimmten großen Differenzschwellwert überschreitet.

8. Verfahren nach Anspruch 1, das weiterhin den Schritt aufweist:

Bestimmen, ob die Veränderung im Lighting bzw. der Belichtung für den gegenwärtigen Block einen vorbestimmten Schwellwert für die große Differenz überschreitet.

9. Verfahren nach Anspruch 1, das weiterhin den Schritt aufweist:

Übertragen des codierten Blockes.

10. Verfahren nach Anspruch 1, das weiterhin den Schritt aufweist:

Absehen (212) von der Codierung des gegenwärtigen Blockes, wenn die Verschiebung des Schwerpunkts unter einen vorbestimmten Schwellwert für die Verschiebung des Schwerpunktes fällt.

11. Vorrichtung für die Verarbeitung von Videodaten, die aufweist:

eine Einrichtung für das Bestimmen einer Differenz zwischen einer Intensität von Pixeln eines gegenwärtigen Blockes (304) des gegenwärtigen Einzelbildes und entsprechenden Pixeln eines am besten passenden Blokkes (302) in einem vorherigen Einzelbild, um ein Differenzarray bzw. eine Differenzanordnung (306) zu erhalten,
eine Einrichtung (206) für das Durchführen einer Schwerpunktsberechnung auf der Differenzanordnung, um jegliche Schwerpunktsverschiebung zwischen dem gegenwärtigen Block und dem am besten passenden Block zu bestimmen, und

**EP 1 086 592 B1**

eine Einrichtung (208, 210) für das Bestimmen, daß der gegenwärtige Block nicht statisch ist und das Codieren des gegenwärtigen Blockes, wenn die Verschiebung des Schwerpunkts einen vorbestimmten Schwellwert für die Verschiebung des Schwerpunkts überschreitet.

12. Vorrichtung nach Anspruch 11, die weiterhin aufweist:

eine Einrichtung für die Vorverarbeitung der Differenzanordnung, um die Effekte des Rauschens zu reduzieren vor dem Schritt des Bestimmens der Verschiebung des Schwerpunktes.

13. Vorrichtung nach Anspruch 12, wobei der Vorverarbeitungsabschnitt beinhaltet:

eine Einrichtung für das auf Null stellen derjenigen Werte der Differenzanordnung, die Pixeln entsprechen mit Werten, die gegenüber ihren benachbarten Pixeln hervorstechen.

14. Vorrichtung nach Anspruch 13, wobei die Vorverarbeitungseinrichtung beinhaltet:

eine Einrichtung für das Vergleichen eines gegenwärtigen Pixels in der Differenzanordnung mit Pixeln in der Differenzanordnung, die eins oberhalb, eins unterhalb, eins links und eins rechts von einem gegenwärtigen Pixel in der Differenzanordnung sind.

15. Vorrichtung nach Anspruch 13, wobei die Vorverarbeitungseinrichtung beinhaltet:

eine Einrichtung für das Vergleichen der Differenzwerte für Pixel in dem vorherigen Block, die eins oberhalb, eins unterhalb, eins links und eins rechts von einem gegenwärtigen Pixel in dem vorherigen Block sind mit einem gegenwärtigen Pixel in dem Differenzarray.

16. Vorrichtung nach Anspruch 12, wobei die vorverarbeitende Einrichtung beinhaltet:

eine Einrichtung für das auf Null stellen der Werte von der Differenzanordnung, die Pixeln entsprechen, die in hoher Intensität variierenden Mustern entsprechen.

17. Vorrichtung nach Anspruch 11, die weiterhin aufweist:

eine Einrichtung für das Bestimmen, ob die Intensität eines Eintrages in der Differenzanordnung einen vorbestimmten großen Differenzschwellwert überschreitet.

18. Vorrichtung nach Anspruch 11, die weiterhin aufweist:

eine Einrichtung für die Bestimmung, ob die Veränderung in der Beleuchtung bzw. des Lightings für den gegenwärtigen Block einen vorbestimmten großen Differenzschwellwert überschreitet.

19. Vorrichtung nach Anspruch 11, die weiterhin aufweist:

eine Einrichtung (114) für das Übertragen des codierten Blockes.

20. Vorrichtung nach Anspruch 11, die weiterhin aufweist:

eine Einrichtung (212) für das Davonabsehen der Codierung des gegenwärtigen Blockes, wenn die Verschiebung des Schwerpunkts unter einen vorbestimmten Schwellwert für die Verschiebung des Schwerpunktes fällt.

21. Computerprogrammprodukt, das aufweist:

ein computernutzbares Medium mit computerlesbarem Code, der auf diesem verkörpert ist, für die Implementierung des Verfahrens nach einem der Ansprüche 1 bis 10.

10

**Revendications**

1. Procédé de traitement de données vidéo, comprenant les étapes :

   de détermination d'une différence entre une intensité de pixels d'un bloc en cours (304) de la trame en cours et de pixels correspondants d'un bloc (302) mieux adapté dans une trame précédente pour conduire à un réseau (306) de différence ;
   d'application d'un calcul (206) de centre de gravité dans le réseau de différence pour détecter tout décalage de centre de gravité entre le bloc en cours et le bloc mieux adapté ; et
   de détermination du bloc en cours comme étant non statique et de codage du bloc en cours lorsque le décalage dans le centre de gravité excède un seuil prédéterminé pour le décalage de gravité (208, 210).

2. Procédé selon la revendication 1, comprenant l'étape :

   de pré-traitement (202) du réseau de différence pour réduire les effets du bruit avant l'étape de détermination du décalage dans le centre de gravité.

3. Procédé selon la revendication 2, dans lequel l'étape de pré-traitement comporte l'étape :

   de mise à zéro de valeurs en provenance du réseau de différence correspondant à des pixels avec des valeurs importantes parmi leurs pixels voisins.

4. Procédé selon la revendication 3, dans lequel l'étape de pré-traitement comporte l'étape :

   de comparaison, avec un pixel en cours dans le réseau de différence, de pixels dans le réseau de différence qui sont l'un au-dessus, l'un au-dessous, l'un à gauche et l'un à droite du pixel en cours dans le réseau de différence.

5. Procédé selon la revendication 3, dans lequel l'étape de pré-traitement comporte l'étape :

   de comparaison, avec un pixel en cours dans le réseau de différence, de valeurs de différence pour des pixels dans le bloc précédent qui sont l'un au-dessus, l'un au-dessous, l'un à gauche et l'un à droite d'un pixel en cours dans le bloc précédent.

6. Procédé selon la revendication 2, dans lequel l'étape de pré-traitement comporte l'étape :

   de mise à zéro de valeurs en provenance du réseau de différence correspondant à des pixels correspondant à des configurations variables haute densité.

7. Procédé selon la revendication 1, comprenant en outre l'étape :

   de détermination du fait que l'intensité d'une entrée dans le réseau de différence excède ou non une valeur de seuil prédéterminée de grande différence.

8. Procédé selon la revendication 1, comprenant en outre l'étape :

   de détermination du fait que le changement de mise en évidence pour le bloc en cours excède ou non un seuil prédéterminé de grande différence.

9. Procédé selon la revendication 1, comprenant en outre l'étape :

   de transmission du bloc codé.

10. Procédé selon la revendication 1, comprenant en outre l'étape :

   d'abstention (212) de codage du bloc en cours lorsque le décalage dans le centre de gravité tombe au-dessous d'un seuil prédéterminé pour le décalage de gravité.

**11.** Appareil pour traiter des données vidéo, comprenant :

un moyen pour déterminer une différence entre une intensité de pixels d'un bloc en cours (304) de la trame en cours et de pixels correspondants d'un bloc (302) mieux adapté dans une trame précédente pour conduire à un réseau (306) de différence ;

un moyen (206) pour appliquer un calcul de centre de gravité au réseau de différence pour déterminer tout décalage de centre de gravité entre le bloc en cours et le bloc mieux adapté ; et

un moyen (208, 210) pour déterminer le bloc en cours comme étant non statique et pour coder le bloc en cours lorsque le décalage dans le centre de gravité excède un seuil prédéterminé pour le décalage de gravité.

**12.** Appareil selon la revendication 11, comprenant en outre :

un moyen pour pré-traiter le réseau de différence pour réduire les effets du bruit avant l'étape de détermination du décalage dans le centre de gravité.

**13.** Appareil selon la revendication 12, dans lequel la partie de pré-traitement comporte :

un moyen pour mettre à zéro des valeurs en provenance du réseau de différence correspondant à des pixels avec des valeurs importantes parmi leurs pixels voisins.

**14.** Appareil selon la revendication 13, dans lequel le moyen de pré-traitement comporte :

un moyen pour comparer, avec un pixel en cours dans le réseau de différence, des pixels dans le réseau de différence qui sont l'un au-dessus, l'un au-dessous, l'un à gauche et l'un à droite du pixel en cours dans le réseau de différence.

**15.** Appareil selon la revendication 13, dans lequel le moyen de pré-traitement comporte :

un moyen pour comparer, avec un pixel en cours dans le réseau de différence, des valeurs de différence pour des pixels dans le bloc précédent qui sont l'un au-dessus, l'un au-dessous, l'un à gauche et l'un à droite d'un pixel en cours dans le bloc précédent.

**16.** Appareil selon la revendication 12, dans lequel le moyen de pré-traitement comporte :

un moyen pour mettre à zéro des valeurs en provenance du réseau de différence correspondant à des pixels correspondant à des configurations variables haute densité.

**17.** Appareil selon la revendication 11, comprenant en outre :

un moyen pour déterminer le fait que l'intensité d'une entrée dans le réseau de différence excède ou non un valeur de seuil prédéterminée de grande différence.

**18.** Appareil selon la revendication 11, comprenant en outre :

un moyen pour déterminer le fait que le changement de mise en évidence pour le bloc en cours excède ou non un seuil prédéterminé de grande différence.

**19.** Appareil selon la revendication 11, comprenant en outre :

un moyen (114) pour transmettre le bloc codé.

**20.** Appareil selon la revendication 11, comprenant en outre :

un moyen (212) pour s'abstenir de coder le bloc en cours lorsque le décalage dans le centre de gravité tombe au-dessous d'un seuil prédéterminé pour le décalage de gravité.

**21.** Produit formant programme d'ordinateur, comprenant :

un support utilisable par ordinateur dans lequel est incorporé un code lisible par ordinateur pour la mise en oeuvre du procédé selon l'une quelconque des revendications 1 à 10.

102
Transmit
(In Transceiver)

106

104
Receive
(In Transceiver)

110
Processor

120
Processor

112

114
Transmit
Software

116
Video data

118
Data
Structures

122

124
Receive
Software

126
Video data

128
Data
Structures

Fig. 1

**Fig. 2**

Fig. 3

402 ⌇

FOR pixel = 1 : NxN;

DIFF_TEST:

404

if      [DIFF(one pixel up)/DIFF(pixel)]   >ThresDIFF OR
[DIFF(one pixel down)/DIFF(pixel)]    >ThresDIFF OR
[DIFF(one pixel left)/DIFF(pixel)]   >ThresDIFF OR
[DIFF(one pixel right)/DIFF(pixel)]>ThresDIFF;
THEN
    VALID = 1, JUMP OLD _TEST;
ELSE
    VALID = 0, JUMP INVALID;
END;

OLD_TEST:
IF
  [OLD(pixel) - OLD(one pixel up)]/DIFF(pixel)]  >ThresOLD OR

406

  [OLD(pixel) - OLD(one pixel down)]/DIFF(pixel)]   > ThresOLD OR
  [OLD(pixel) - OLD(one pixel left)]/DIFF(pixel)]   >ThresOLD OR
  [OLD(pixel) - OLD(one  pixel right)]/DIFF(pixel)]   >ThresOLD;
THEN
    VALID = 0, JUMP INVALID;
ELSE
    VALID = 1, JUMP VALID'
END;

408

INVALID:

DIFF(pixel) = 0;

410

VALID:

do_nothing;

END;

## FIG. 4

**Fig. 5**